# EUROPÄISCHE PATENTSCHRIFT

(11) **EP 0 451 092 B1**
(45) Veröffentlichungstag und Bekanntmachung des Hinweises auf die Patenterteilung: **08.05.1996**
(21) Anmeldenummer: 91810177.5
(22) Anmeldetag: 19.03.1991
(51) Int. Cl.: C09B 67/36, C09B 29/01

(54) **Konzentrierte Farbstofflösungen**
Concentrated dyestuff solutions
Solutions concentrées de colorants

(30) Priorität: 03.04.1990 CH 1102/90
(43) Veröffentlichungstag der Anmeldung: 09.10.1991
(73) Patentinhaber: CIBA-GEIGY AG, CH-4002 Basel (CH)
(72) Erfinder: Stingelin, Willy, Dr., CH-4153 Reinach (CH)

(56) Entgegenhaltungen:
- WO-A-86/01815
- DE-A- 2 206 551
- GB-A- 2 052 547

## Beschreibung

Gegenstand der vorliegenden Erfindung sind konzentrierte wässrige Farbstofflösungen, enthaltend
a) 7 bis 30 Gew.-% eines Farbstoffes der Formel 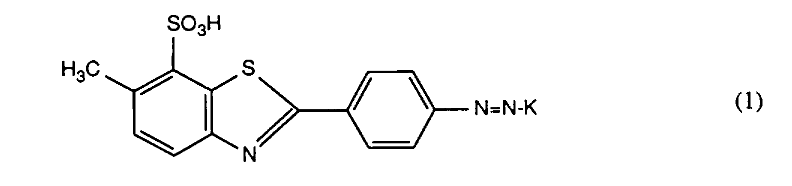 worin K eine Kupplungskomponente der Acetoacetanilid-, Pyridon-, Pyrazolon- oder Pyrimidinreihe ist,
b) mindestens 0,1 aber weniger als 1 Mol 3-Diethylamino-1-propylamin, pro Mol Farbstoff der Formel (1),
c) soviel eines Hydroxyalkylamins,
   dass insgesamt 1,5 bis 5 Mol der Komponenten b) und c) pro Mol Farbstoff vorhanden sind, und
d) gegebenenfalls weitere Zusätze.

Bervorzugte erfindungsgemässe Farbstofflösungen enthalten 0,1 bis 0,9, vor allem 0,2 bis 0,6 Mol 3-Diethylamino-1-propylamin pro Mol Farbstoff der Formel (1) und 2 bis 4 vor allem 2,5 bis 4 Mol Hydroxyalkylamin.

Vorzugsweise enthalten die erfindungsgemässen Farbstofflösungen 10 bis 25 Gew.-% eines Farbstoffes der Formel (1).

In der obigen Formel (1) bedeutet K eine Kupplungskomponente der Acetoacetanilid-, Pyridon-, Pyrazolon- oder Pyrimidinreihe. Es handelt sich vor allem um die bei Azofarbstoffen, insbesondere bei Papierfarbstoffen, gebräuchlichen Kupplungskomponenten.

Vorzugsweise ist K eine Kupplungskomponente der Formel 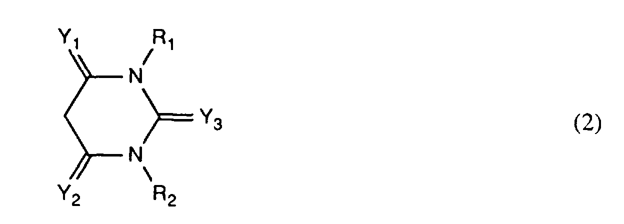 worin Y₁ und Y₂ unabhängig voneinander =O, =NH oder =N-C₁-C₄-Alkyl, Y₃ =O, =S, =NR oder =N-CN, wobei R Wasserstoff oder C₁-C₄-Alkyl ist, und R₁ und R₂ unabhängig voneinander je Wasserstoff, gegebenenfalls substituiertes Alkyl oder gegebenenfalls substituiertes Phenyl bedeuten.

In der obigen Formel (2) ist für die Kupplungskomponente nur eine tautomere Form angegeben, auch die anderen tautomeren Formen sollen jedoch durch diese Formel mit umfasst sein.

Stellen R₁ und/oder R₂ eine gegebenenfalls substituierte Alkylgruppe dar, so ist darunter z.B. ein Methyl-, Ethyl-, n- oder iso-Propyl-, n-, sec.- oder tert.-Butyl-, ein geradkettiger oder verzweigter Pentyl- oder Hexyl- oder ein Cyclohexylrest zu verstehen, der einfach oder mehrfach z.B. durch -OH, C₁-C₄-Alkoxy oder C₁-C₄-Hydroxyalkoxy substituiert sein kann.

Beispiele für geeignete substituierte Alkylreste sind: Methoxymethyl, Ethoxymethyl, Ethoxyethyl, Ethoxypropyl, n-Propoxymethyl, iso-Propoxymethyl, Butoxymethyl, Butoxyethyl, Butoxypropyl, Methoxybutyl, Ethoxypentyl und 2-Hydroxyethoxypentyl.

Bedeuten R₁ und/oder R₂ gegebenenfalls substituiertes Phenyl, so kann es sich um unsubstituiertes oder einfach oder mehrfach mit gleichen oder verschiedenen Resten substituiertes Phenyl handeln.

Als derartige Reste kommen z.B. in Frage: C₁-C₄-Alkyl, worunter generell in dieser Anmeldung Methyl, Ethyl, n- oder iso-Propyl oder n-, sec.- oder tert.-Butyl zu verstehen ist, C₁-C₄-Alkoxy, welches in dieser Anmeldung generell Methoxy, Ethoxy, n- oder iso-Propoxy oder n-, sec.- oder tert.-Butoxy umfasst, Halogen wie Fluor, Chlor oder Brom oder Nitro.

Vorzugsweise handelt es sich bei R₁ und/oder R₂ als Phenyl um unsubstituiertes oder mit 1 bis 3 C₁-C₄-Alkyl, Chlor oder Methoxygruppen substituiertes Phenyl, wobei insbesondere die Bedeutung unsubstituiertes Phenyl bevorzugt ist.

R₁ und R₂ stehen bevorzugt für Wasserstoff oder C₁-C₄-Alkyl und besonders bevorzugt für Wasserstoff oder Methyl.

Y₁ und/oder Y₂ stehen vorzugsweise für die funktionelle Gruppe =O oder =NH, wobei es ausserdem bevorzugt ist, dass Y₁ und Y₂ gleich sind. Y₁ und Y₂ sind besonders bevorzugt gleich und bedeuten jeweils =NH.

Y₃ stellt bevorzugt die Gruppe =O, =S, =NH oder =N-CN und insbesondere bevorzugt die Gruppe =NH dar.

In einer besonders bevorzugten Ausführungsform enthalten die erfindungsgemässen Farbstofflösungen Azofarbstoffe der Formel (1), worin R₁ und R₂ unabhängig voneinander je Wasserstoff oder C₁-C₄-Alkyl, Y₁ und Y₂ unabhängig voneinander je =O oder =NH und Y₃ =O, =S, =NH oder =N-CN bedeutet.

Die Farbstoffe der Formel (1) sind bekannt oder werden auf bekannte Art und Weise erhalten, siehe z.B. WO 86/01815.

Die erfindungsgemässen wässrigen Farbstofflösungen enthalten mindestens 0,1 aber weniger als 1 Mol 3-Diethylamino-1-propylamin pro Mol Farbstoff der Formel (1) und ein Hydroxyalkylamin, wie z.B. Ethanolamin, Diethanolamin, Triethanolamin, 2-Dimethylaminoethanol, 2-Methylaminoethanol, N,N-Bis-(2-hydroxyethyl)-1,3-diaminopropan, N-(2-Hydroxyethyl)-ethylendiamin oder 2-Hydroxypropylamin. Es können auch Gemische, enthaltend 2 oder mehrere dieser Hydroxyalkylamine eingesetzt werden.

Zusätzlich können die erfindungsgemässen Farbstofflösungen wasserlösliche organische Lösungsvermittler enthalten. In Frage kommen z.B.: Harnstoff, Formamid, ε-Caprolactam, Dimethylformamid, 1,2-Diaminopropan, mehrwertige Alkohole, wie z.B. Ethylenglykol, Propylenglykol oder Glycerin.

Die Menge an organischem Lösungsvermittler hängt u.a. davon ab, wieviel 3-Diethylamino-1-propylamin und Hydroxyalkylamin in den Farbstofflösungen enthalten ist. Liegt der Gehalt an den genannten Aminen bei ca. 2 bis 4 Mol pro Mol Farbstoff, so ist im allgemeinen kein organischer Lösungsvermittler oder nur ca. 5 bis 10 Gew.-% davon, bezogen auf das Gesamtgewicht der Farbstofflösung, erforderlich. Andererseits ist es aus ökonomischen Gründen oft vorteilhaft, den Gehalt an den genannten Aminen bei ca. 1,5 bis 2,5 Mol pro Mol Farbstoff einzustellen und zusätzlich ca. 10 bis 25 Gew.-% an organischem Lösungsvermittler einzusetzen.

Bevorzugte erfindungsgemässe wässrige Farbstofflösungen enthalten
a) 10 bis 30 Gew.-% eines Farbstoffes der Formel (1),
b) 0,1 bis 0,9 Mol 3-Diethylamino-1-propylamin pro Mol Farbstoff der Formel (1),
c) 2-4 Mol Hydroxyalkylamin pro Mol Farbstoff der Formel (1) sowie
d) 0 bis 25 Gew.-% eines organischen Lösungsvermittlers.

Unter diesen sind diejenigen besonders bevorzugt, welche
a) 10 bis 30 Gew.-% eines Farbstoffes der Formel (1),
b) 0,2 bis 0,6 Mol 3-Diethylamino-1-propylamin pro Mol Farbstoff der Formel (1),
c) 2,5 bis 4 Mol Hydroxyalkylamin pro Mol Farbstoff der Formel (1) sowie
d) 0 bis 25 Gew.-% eines organischen Lösungsvermittlers enthalten.

Die Herstellung der erfindungsgemässen konzentrierten wässrigen Farbstofflösungen erfolgt im allgemeinen in der Weise, dass die freien Farbstoffsäuren mit einer Mischung aus Wasser, 3-Diethylamino-1-propylamin, Hydroxyalkylamin sowie gegebenenfalls einem organischen Lösungsvermittler verrührt werden, bis eine homogene Lösung entsteht. Falls erforderlich kann die Mischung erwärmt werden, z.B. auf 40 bis 80°C, und evtl. filtriert werden.

Die erhaltenen konzentrierten wässrigen Farbstofflösungen zeichnen sich vor allem durch eine gute Lagerstabilität aus.

Verwendung finden die erfindungsgemässen konzentrierten Farbstofflösungen, gegebenenfalls nach dem Verdünnen mit Wasser, insbesondere zum Färben und Bedrucken von Papier, einschliesslich Halbkartons und Kartons, wobei man diese Materialien z.B. in der Masse, durch Streichen oder durch Tauchen färben kann. Im übrigen kann eine derartige Flüssigformulierung auch für ein kontinuierliches oder diskontinuierliches Färbeverfahren für Textilmaterialien, insbesondere cellulosischen oder Cellulose enthaltenden Textilmaterialien, eingesetzt werden.

Die nachfolgenden Beispiele veranschaulichen die Erfindung. Darin bedeuten Teile Gewichtsteile.

### Beispiel 1:

1522 Teile des wässrigen Presskuchens, enthaltend 456,5 Teile des Farbstoffes der Formel 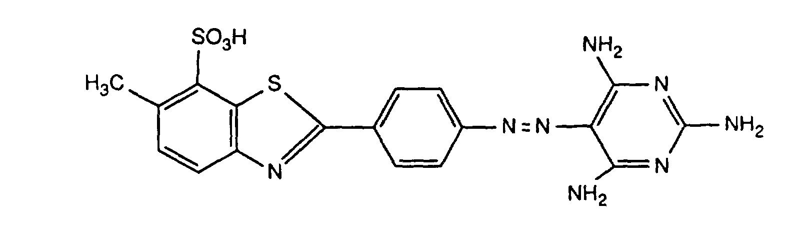 als freie Farbstoffsäure, werden mit 41,3 Teilen 3-Diethylamino-1-propylamin, 42 Teilen Diethanolamin und 246 Teilen 2-Methylaminoethanol versetzt und mit Wasser auf ein Gesamtgewicht von 4348 Teile gestellt. Die erhaltene Suspension wird unter Rühren auf 50°C erwärmt und bei dieser Temperatur so lange gerührt, bis der Farbstoff vollständig in Lösung gegangen ist. Die Farbstofflösung wird dann noch klärfiltriert.

Man erhält eine flüssige Farbstoff-Handelsform, welche auch nach einmonatiger Lagerung bei 3-5°C keinerlei Rückstand zeigt.

### Beispiel 2:

920 Teile des wässrigen Presskuchens, enthaltend 260 Teile des Farbstoffes der im Beispiel 1 aufgeführten Formel werden mit 23,5 Teilen 3-Diethylamino-1-propylamin und 167 Teilen 2-Methylaminoethanol versetzt und mit Wasser auf ein Gesamtgewicht von 2600 Teile gestellt. Die erhaltene Suspension wird unter Rühren auf 50°C erwärmt und bei dieser Temperatur so lange gerührt, bis der Farbstoff vollständig in Lösung gegangen ist. Die Farbstofflösung wird dann noch klärfiltriert.

Man erhält eine flüssige lagerstabile Farbstoff-Handelsform.

### Beispiel 3:

920 Teile des gleichen wässrigen Presskuchens wie im Beispiel 2 werden mit 14,8 Teilen 3-Diethylamino-1-propylamin und 193 Teilen Dimethylaminoethanol versetzt, mit Wasser auf ein Gesamtgewicht von 2600 Teile gestellt und im übrigen wie im Beispiel 2 ausgeführt zu einer flüssigen lagerstabilen Handelsform weiterverarbeitet.

### Beispiel 4:

920 Teile des gleichen wässrigen Presskuchens wie im Beispiel 2 werden mit 11,7 Teilen 3-Diethylamino-1-propylamin, 12,6 Teilen Diethanolamin und 165,5 Teilen 2-Methylaminoethanol versetzt, mit Wasser auf ein Gesamtgewicht von 2600 Teile gestellt und im übrigen wie im Beispiel 2 ausgeführt zu einer flüssigen Handelsform weiterverarbeitet.

### Beispiel 5:

920 Teile des gleichen wässrigen Presskuchens wie im Beispiel 2 werden mit 18,5 Teilen 3-Diethylamino-1-propylamin, 15 Teilen Diethanolamin und 107 Teilen 2-Methylaminoethanol versetzt, mit Wasser auf ein Gesamtgewicht von 2600 Teile gestellt und im übrigen wie im Beispiel 2 ausgeführt zu einer flüssigen Handelsform weiterverarbeitet.

### Beispiel 6-10:

Man arbeitet wie im Beispiel 1 beschrieben, verwendet jedoch anstelle des dort eingesetzten Farbstoffes äquivalente Mengen der Farbstoffe, die man durch Diazotierung von Dehydrothiotoluidin-7-sulfonsäure und Kuppeln mit den in der folgenden Tabelle aufgeführten Kupplungskomponenten erhält.

Man erhält auf diese Weise konzentrierte Lösungen der Farbstoffe, welche sich durch gute Lagerstabilität auszeichnen.

| Beispiel | Kupplungskomponente |
|---|---|
| 6 | Barbitursäure |
| 7 | Cyaniminobarbitursäure |
| 8 | 3-Methyl-5-pyrazolon |
| 9 | 1,3-Dimethylbarbitursäure |
| 10 | 4-Amino-2,6-dihydroxypyrimidin |

### Beispiel 11:

In einem Holländer werden 70 Teile chemisch gebleichte Sulfitzellulose aus Nadelholz und 30 Teile chemisch gebleichte Sulfitzellulose aus Birkenholz in 2000 Teilen Wasser gemahlen. Zu dieser Masse gibt man 0,3 Teile der im Beispiel 1 beschriebenen Farbstoff-Handelsform. Nach 20 Minuten Mischzeit wird aus dieser Masse Papier hergestellt. Das auf diese Weise erhaltene saugfähige Papier ist gelb gefärbt. Das Abwasser ist praktisch farblos.

## Patentansprüche

1. Konzentrierte wässrige Farbstofflösungen, enthaltend
a) 7 bis 30 Gew.-% eines Farbstoffes der Formel 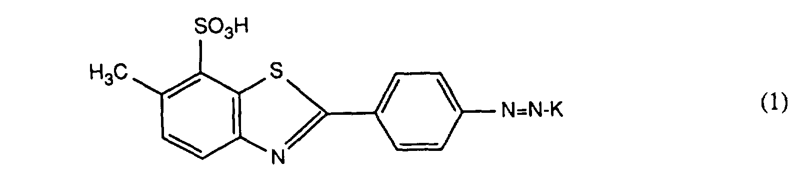 worin K eine Kupplungskomponente der Acetoacetanilid-, Pyridon-, Pyrazolon- oder Pyrimidinreihe ist,
b) mindestens 0,1 aber weniger als 1 Mol 3-Diethylamino-1-propylamin, pro Mol Farbstoff der Formel (1),
c) soviel eines Hydroxyalkylamins,
dass insgesamt 1,5 bis 5 Mol der Komponenten b) und c) pro Mol Farbstoff vorhanden sind, und
d) gegebenenfalls weitere Zusätze.

2. Konzentrierte wässrige Farbstofflösung gemäss Anspruch 1, enthaltend 10 bis 25 Gew.-% eines Farbstoffes der Formel (1).

3. Konzentrierte wässrige Farbstofflösung gemäss einem der Ansprüche 1 oder 2, enthaltend einen Farbstoff der Formel (1), worin
K eine Kupplungskomponente der Formel 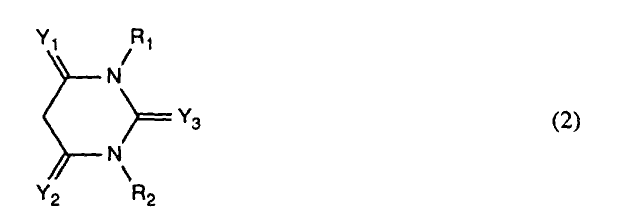 bedeutet, worin Y₁ und Y₂ unabhängig voneinander =O, =NH oder =N-C₁-C₄-Alkyl, Y₃ =O, =S, =NR oder =N-CN, wobei R Wasserstoff oder C₁-C₄-Alkyl ist, und R₁ und R₂ unabhängg voneinander je Wasserstoff, gegebenenfalls substituiertes Alkyl oder gegebenenfalls substituiertes Phenyl bedeuten,

4. Konzentrierte wässrige Farbstofflösung gemäss Anspruch 3, worin R₁ und R₂ unabhängig voneinander je Wasserstoff oder C₁-C₄-Alkyl bedeuten.

5. Konzentrierte wässrige Farbstofflösung gemäss einem der Ansprüche 3 oder 4, worin Y₁ und Y₂ unabhängig voneinander je =O oder =NH bedeuten.

6. Konzentrierte wässrige Farbstofflösung gemäss einem der Ansprüche 3 bis 5, worin Y₃ =O, =S, =NH oder =N-CN, insbesondere =NH bedeutet.

7. Konzentrierte wässrige Farbstofflösung gemäss einem der Ansprüche 4 bis 6, worin R₁ und R₂ unabhängig voneinander je Wasserstoff oder C₁-C₄-Alkyl, Y₁ und Y₂ unabhängig voneinder je =O oder =NH und Y₃ =O, =S, =NH oder =N-CN bedeutet.

8. Konzentrierte wässrige Farbstofflösung gemäss einem der Ansprüche 1 bis 7, dadurch gekennzeichnet, dass sie 0,1 bis 0,9 Mol 3-Diethylamino-1-propylamin und 2 bis 4 Mol Hydroxyalkylamin pro Mol Farbstoff enthalten.

9. Konzentrierte wässrige Fabstofflösung gemäss einem der Ansprüche 1 bis 8, dadurch gekennzeichnet, dass sie 0,2 bis 0,6 Mol 3-Diethylamino-1-propylamin und 2,5 bis 4 Mol Hydroxyalkylamin enthalten.

10. Konzentrierte wässrige Farbstofflösung gemäss einem der Ansprüche 1 bis 9, dadurch gekennzeichnet, dass sie als Hydroxyalkylamin Diethanolamin, 2-Methylaminoethanol oder Dimethylaminoethanol enthalten.

11. Konzentrierte wässrige Farbstofflösung gemäss einem der Ansprüche 1 bis 10, dadurch gekennzeichnet, dass sie als organischen Lösungsvermittler Harnstoff, ε-Caprolactam oder einen mehrwertigen Alkohol enthalten.

12. Konzentrierte wässrige Farbstofflösung gemäss einem der Ansprüche 1 bis 11, enthaltend
a) 10 bis 30 Gew.-% eines Farbstoffes der Formel (1),
b) 0,1 bis 0,9 Mol 3-Diethylamino-1-propylamin pro Mol Farbstoff der Formel (1),
c) 2-4 Mol Hydroxyalkylamin pro Mol Farbstoff der Formel (1) sowie
d) 0 bis 25 Gew.-% eines organischen Lösungsvermittlers.

13. Konzentrierte Farbstofflösung gemäss Anspruch 12, enthaltend
a) 10 bis 30 Gew.-% eines Farbstoffes der Formel (1),
b) 0,2 bis 0,6 Mol 3-Diethylamino-1-propylamin pro Mol Farbstoff der Formel (1),
c) 2,5 bis 4 Mol Hydroxyalkylamin pro Mol Farbstoff der Formel (1) sowie
d) 0 bis 25 Gew.-% eines organischen Lösungsvermittlers enthalten.

14. Verfahren zur Herstellung von konzentrierten wässrigen Farbstofflösungen gemäß Anspruch 1, dadurch gekennzeichnet, dass man einen Farbstoff der Formel 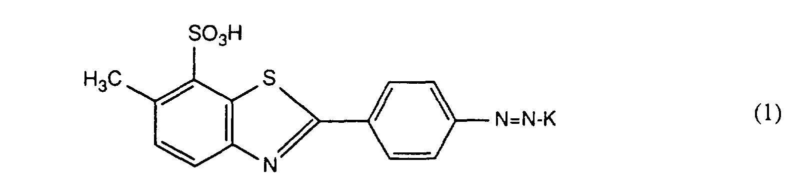 worin K eine Kupplungskomponente der Acetoacetanilid-, Pyridon-, Pyrazolon- oder Pyrimidinreihe bedeutet, mit einer Mischung aus Wasser, 3-Diethylamino-1-propylamin, einem Hydroxyalkylamin und gegebenenfalls einem organischen Lösungsvermittler verrührt, bis eine homogene Lösung entsteht.

15. Verwendung der Farbstofflösungen gemäss einem der Ansprüche 1 bis 13 zum Färben von Textilmaterial aus Cellulose und insbesondere von Papier.

## Claims

1. A concentrated aqueous dye solution, comprising
a) 7 to 30 % by weight of a dye of the formula 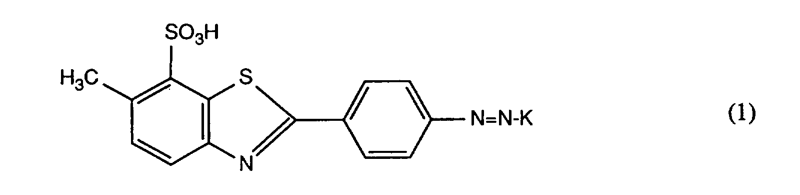 in which K is a coupling component of the acetoacetanilide, pyridone, pyrazolone or pyrimidine series,
b) at least 0.1 but less than 1 mol of 3-diethylamino-1-propylamine, per mol of dye of the formula (1),
c) a quantity of a hydroxyalkylamine such that altogether 1.5 to 5 mol of the components b) and c) are present per mol of dye, and
d) if desired, other additives.

2. A concentrated aqueous dye solution according to claim 1, comprising 10 to 25 % by weight of a dye of the formula (1).

3. A concentrated aqueous dye solution according to either claim 1 or claim 2, comprising a dye of the formula (1) in which
K is a coupling component of the formula 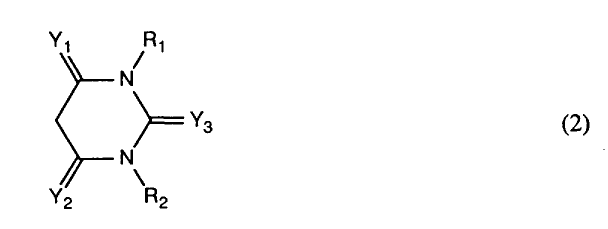 in which Y₁ and Y₂ independently of one another are =O, =NH or =N-C₁-C₄alkyl, Y₃ is =O, =S, =NR or =N-CN, where R is hydrogen or C₁-C₄alkyl, and R₁ and R₂ independently of one another are each hydrogen, substituted or unsubstituted alkyl or substituted or unsubstituted phenyl.

4. A concentrated aqueous dye solution according to claim 3, in which R₁ and R₂ independently of one another are each hydrogen or C₁-C₄alkyl.

5. A concentrated aqueous dye solution according to either claim 3 or claim 4, in which Y₁ and Y₂ independently of one another are each =O or =NH.

6. A concentrated aqueous dye solution according to any one of claims 3 to 5, in which Y₃ is =O, =S, =NH or =N-CN, in particular =NH.

7. A concentrated aqueous dye solution according to any one of claims 4 to 6, in which R₁ and R₂ independently of one another are each hydrogen or C₁-C₄alkyl, Y₁ and Y₂ independently of one another are each =O or =NH and Y₃ is =O, =S, =NH or =N-CN.

8. A concentrated aqueous dye solution according to any one of claims 1 to 7, which contains 0.1 to 0.9 mol of 3-diethylamino-1-propylamine and 2 to 4 mol of hydroxyalkylamine per mol of dye.

9. A concentrated aqueous dye solution according to any one of claims 1 to 8, which contains 0.2 to 0.6 mol of 3-diethylamino-1-propylamine and 2.5 to 4 mol of hydroxyalkylamine.

10. A concentrated aqueous dye solution according to any one of claims 1 to 9, which contains diethanolamine, 2-methylaminoethanol or dimethylaminoethanol as the hydroxyalkylamine.

11. A concentrated aqueous dye solution according to any one of claims 1 to 10, which contains urea, ε-caprolactam or a polyhydric alcohol as the organic solubiliser.

12. A concentrated aqueous dye solution according to any one of claims 1 to 11, comprising
a) 10 to 30 % by weight of a dye of the formula (1),
b) 0.1 to 0.9 mol of 3-diethylamino-1-propylamine per mol of dye of the formula (1),
c) 2-4 mol of hydroxyalkylamine per mol of dye of the formula (1) and
d) 0 to 25 % by weight of an organic solubiliser.

13. A concentrated dye solution according to claim 12, comprising
a) 10 to 30 % by weight of a dye of the formula (1),
b) 0.2 to 0.6 mol of 3-diethylamino-1-propylamine per mol of dye of the formula (1),
c) 2.5 to 4 mol of hydroxyalkylamine per mol of dye of the formula (1) and
d) 0 to 25 % by weight of an organic solubiliser.

14. A process for the preparation of concentrated aqueous dye solutions according to claim 1, which comprises stirring a dye of the formula 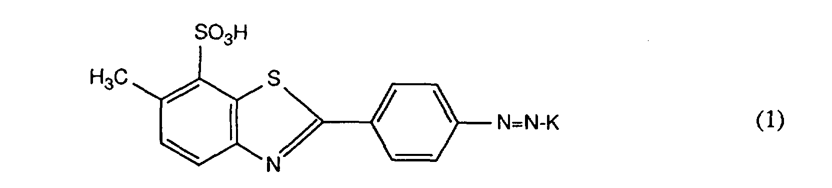 in which K is a coupling component of the acetoacetanilide, pyridone, pyrazolone or pyrimidine series, with a mixture of water, 3-diethylamino-1-propylamine, a hydroxyalkylamine and, if desired, an organic solubiliser until a homogeneous solution is formed.

15. The use of the dye solutions according to any one of claims 1 to 13 for dyeing cellulose textile material and, in particular, paper.

## Revendications

1. Solutions de colorant aqueuses et concentrées contenant
a) de 7 à 30 % en poids d'un colorant de formule 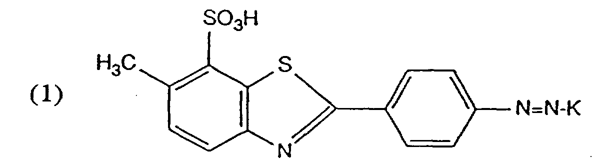 dans laquelle K représente un copulant de la série des acétoacétanilides, pyridones, pyrazolones ou pyrimidines,
b) au moins 0,1 mais moins de 1 mole de 3-diéthylamino-1-propylamine par mole de colorant de formule (1),
c) une quantité d'une hydroxylamine telle qu'au total 1,5 à 5 moles des composants b) et c) soient présents par mole de colorant, et
d) éventuellement d'autres additifs.

2. Solutions de colorant aqueuses et concentrées conformes à la revendication 1, contenant de 10 à 25 % en poids d'un colorant de formule (1).

3. Solutions de colorant aqueuses et concentrées conformes à une des revendications 1 ou 2 contenant un colorant de formule (1), dans laquelle K représente un copulant de formule 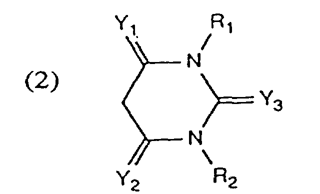 dans laquelle Y₁ et Y₂ représentent indépendamment l'un de l'autre un groupe =O, =NH ou =NH-(alkyle en C₁₋₄), Y₃ représente un groupe =O, =S, =NR ou =N-CN, R représentant un atome d'hydrogène ou un groupe alkyle en C₁₋₄ et R₁ et R₂ représentent indépendamment l'un de l'autre un atome d'hydrogène, un groupe alkyle pouvant être substitué ou un groupe phényle pouvant être substitué.

4. Solutions de colorant aqueuses et concentrées conformes à la revendication 3 dans lesquelles R₁ et R₂ représentent indépendamment l'un de l'autre un atome d'hydrogène ou un groupe alkyle en C₁₋₄.

5. Solution de colorant aqueuse et concentrée conforme à une des revendications 3 ou 4, dans laquelle Y₁ et Y₂ représentent indépendamment l'un de l'autre un groupe =O ou =NH.

6. Solution de colorant aqueuse et concentrée conforme à une des revendications 3 à 5 dans laquelle Y₃ représente un groupe =O, =S, =NH ou -N=CN, en particulier =NH.

7. Solution de colorant aqueuse et concentrée conforme à une des revendications 4 à 6 dans laquelle R₁ et R₂ représentent indépendamment l'un de l'autre un atome d'hydrogène ou un groupe alkyle en C₁₋₄, Y₁ et Y₂ représentent indépendamment l'un de l'autre un groupe =O ou =NH et Y₃ un groupe =O, =S, =NH ou =N-CN.

8. Solution de colorant aqueuse et concentrée conforme à une des revendications 1 à 7, caractérisée en ce qu'elle contient de 0,1 à 0,9 mole de 3-diéthylamino-1-propylamine et de 2 à 4 moles d'hydroxyalkylamine par mole de colorant.

9. Solution de colorant aqueuse et concentrée conforme à une des revendications 1 à 8, caractérisée en ce qu'elle contient de 0,2 à 0,6 mole de 3-diéthylamino-1-propylamine et de 2,5 à 4 moles d'hydroxyalkylamine par mole de colorant.

10. Solution de colorant aqueuse et concentrée conforme à une des revendications 1 à 9, caractérisée en ce que l'elle contient comme hydroxyalkylamine de la diéthanolamine, du 2-méthylaminoéthanol ou du diméthylaminoéthanol.

11. Solution de colorant aqueuse et concentrée conforme à une des revendications 1 à 10, caractérisée en ce qu'elle contient de l'urée, du ε-caprolactame ou un alcool polyvalent comme agent de solubilisation.

12. Solution de colorant aqueuse et concentrée conforme à une des revendications 1 à 11, contenant
a) de 10 à 30 % en poids d'un colorant de formule (1),
b) de 0,1 à 0,9 mole de 3-diéthylamino-1-propylamine par mole de colorant de formule (1),
c) de 2 à 4 moles d'hydroxyalkylamine par mole de colorant de formule (1) ainsi que
d) de 0 à 25 % en poids d'un agent de solubilisation organique.

13. Solution de colorant aqueuse et concentrée conforme à la revendication 12, contenant
a) de 10 à 30 % en poids d'un colorant de formule (1),
b) de 0,2 à 0,6 mole de 3-diéthylamino-1-propylamine par mole de colorant de formule (1),
c) de 2,5 à 4 moles d'hydroxyalkylamine par mole de colorant de formule (1) ainsi que
d) de 0 à 25 % en poids d'un agent de solubilisation organique.

14. Procédé pour la préparation de solutions de colorant aqueuses concentrées conformes à la revendication 1, caractérisé en ce que l'on mélange sous agitation un colorant de formule 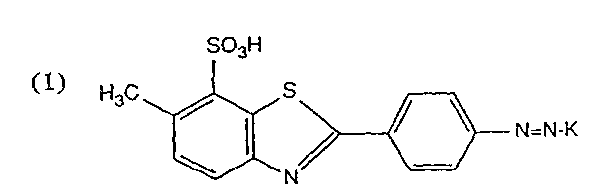 dans laquelle K représente un copulant de la série des acétoacétanilides, pyridones, pyrazolones ou pyrimidines, avec un mélange d'eau, de 3-diéthylamino-1-propylamine, d'une hydroxyalkylamine et éventuellement d'un agent de solubilisation organique jusqu'à obtenir une solution homogène.

15. Utilisation des solutions de colorant conformes à une des revendications 1 à 13 pour la teinture de substrats textiles en cellulose et en particulier de papier.
